Europäisches Patentamt

European Patent Office

Office européen des brevets

(19)

(11) Veröffentlichungsnummer: **0 153 594**

**A2**

## (12) EUROPÄISCHE PATENTANMELDUNG

(21) Anmeldenummer: **85100846.6**

(22) Anmeldetag: **28.01.85**

(51) Int. Cl.⁴: **F 02 F 3/02**
**F 16 J 1/02**

(30) Priorität: **29.02.84 DE 3407405**

(43) Veröffentlichungstag der Anmeldung:
**04.09.85 Patentblatt 85/36**

(84) Benannte Vertragsstaaten:
**DE FR GB IT**

(71) Anmelder: **GOETZE AG**
**Bürgermeister-Schmidt-Strasse 17**
**D-5093 Burscheid 1(DE)**

(72) Erfinder: **Michel, Hans-Albert, Dipl.-Ing.**
**Burscheider Strasse 129**
**D-5090 Leverkusen 3(DE)**

(54) Kolben für Brennkraftmaschinen.

(57) Ein Kolben für Brennkraftmaschinen weist partiell im Bereich seiner 90° versetzt zur Bolzenachse angeordnete Arbeitsebenen Verjüngungen auf, die eine Anlage des Kolbenbodenrandes an der Laufbuchse beziehungsweise Zylinderwand verhindern sollen. Diese können zum Beispiel konisch ansteigend sich in Richtung der ersten Nut erstrecken.

FIG. 1

Croydon Printing Company Ltd.

- 1 -

## Kolben für Brennkraftmaschinen.

Die Erfindung betrifft einen Kolben für Brennkraftmaschinen, der brennraumseitig mindestens eine umlaufende Nut zur Aufnahme mindestens eines Dichtelementes sowie einen mit axialem Abstand zum Kolbenboden sich diametral erstreckenden und mit dem Kolben verbundenen Bolzen aufweist und der im Bereich des Feuersteges verjüngt ausgebildet ist.

Durch die DE-PS 907 607 ist bereits ein Kolben der vorab angesprochenen Gattung bekannt. Die Verjüngung im Bereich des Feuersteges ist umlaufend ausgebildet. Kolben dieser Bauform sind bekannt als "Cut-Back-Kolben". Durch diese Maßnahme sollen Polierstellen an der Laufbuchse beziehungsweise der Zylinderwand und Ölschieben - ausgelöst durch harten Koks, der sich am Kolbenbodenrand aufbaut - vermieden werden. Dadurch können sich große radiale Spiele zwischen Feuersteg und Laufbuchse einstellen. Die Berührung der Laufbuchse beziehungsweise Zylinderwand durch den Kolbenbodenrand wird beim Anlagewechsel des Kolbens somit vermieden. Nachteilig an einer solchen Bauform ist jedoch zu bemerken, daß durch dieses vergrößerte Spiel der Kraftstoffverbrauch des Motors ansteigt und die Schadstoffanteile im Abgas ebenfalls zunehmen, da die Flammenfront nicht in den Bereich zwischen Feuersteg und Laufbuchse beziehungsweise Zylinderwand gelangen kann. Es verbleiben unverbrannte Gasrückstände in diesen Räumen. Außerdem verringert sich der Gesamtwirkungsgrad der Maschine.

Der Erfindung liegt demgemäß die Aufgabe zugrunde, die Nachteile des "Cut-Back-Kolbens" zu beseitigen beziehungsweise stark zu vermindern bei gleichzeitiger Beibehaltung der vorstehend genannten Vorteile.

Diese Aufgabe wird.erfindungsgemäß dadurch gelöst, daß die Verjüngung sich jeweils im wesentlichen unter einem Winkel von 90° versetzt zur Bolzenachse in den beiden Arbeitsebenen des Kolbens erstreckt. Durch die partielle Anordnung der Verjüngung ausschließlich im Bereich der beiden Arbeitsebenen des Kolbens werden die Räume, in denen unverbrannte Gasrückstände verbleiben können, deutlich verringert. Das Verdichtungsverhältnis wird weniger herabgesetzt und der Kraftstoffverbrauch somit nur geringfügig erhöht. Gleichzeitig werden die Berührungen des Kolbenbodens mit der Laufbuchse beziehungsweise der Zylinderwand, die ausschließlich im Bereich der beiden Arbeitsebenen auftreten, ebenfalls unterbunden.

Durch die US-PS 3 463 057 ist zwar bereits ein zylindrisch ausgebildeter Kolben bekannt, der mehrere vom Kolbenboden ausgehend, axial in Richtung der ersten Nut verlaufende Ausnehmungen aufweist. Zum einen verlaufen diese Ausnehmungen unter einem Winkel von 45° zur Bolzenachse, so daß in den Arbeitsebenen nach wie vor eine Berührung zwischen Kolbenbodenrand und Lauffläche beziehungsweise Zylinderwand eintritt und zum anderen sind diese Ausnehmungen ausschließlich dazu vorgesehen, den Gasdruck radial hinter den ersten Kolbenring zu leiten, damit dieser

- 3 -

besser radial an die Laufbuchse beziehungsweise Zylinderwand angedrückt wird. Aufgrund dieser Thematik ist es nicht naheliegend, die hier bereits vorhandenen Ausnehmungen auf den erfindungsgemäßen Kolben zu übertragen.

Eine mögliche Variante zur Ausbildung des Kolbens ist darin zu sehen, den Feuersteg mit einem im wesentlichen elliptischen Querschnitt auszubilden, wobei der Durchmesser im Bereich der diametral gegenüberliegenden Arbeitsebenen geringer ausgebildet ist als im Restbereich.

Ferner besteht die Möglichkeit, den Feuersteg im Bereich der Arbeitsebenen abgesetzt auszubilden. Welche spezielle Kontur der Fachmann auswählt sollte vom jeweiligen Anwendungsfall abhängig gemacht werden.

Damit die Räume für eventuelle Gasrückstände möglichst klein gehalten werden, ohne daß es jedoch zu einer Berührung zwischen Kolbenbodenrand und Laufbuchse beziehungsweise Zylinderwand führt, wird weiterhin vorgeschlagen, die Umfangslänge eines jeden verjüngten Bereiches zu begrenzen.

Vorzugsweise soll der jeweilige verjüngte Bereich sich - ausgehend von den 90° versetzt zur Bolzenachse verlaufenden Arbeitsebenen - rechts und links in beiden Umfangsrichtungen zwischen 10° und 45°, insbesondere jedoch zwischen 10° und 30° Drehwinkel erstrecken. Der jeweils erforderliche Winkel ist auch hier vom Durchmesser des entsprechenden Kolbens abhängig.

- 4 -

Der Neigungswinkel der verjüngten Bereiche soll - ebenfalls vom Kolbendurchmesser abhängig - vom Kolbenboden
ausgehend, in Richtung der Nut ansteigend, etwa zwischen
2° und 10° betragen, um sicherzustellen, daß keine Berührung zwischen Kolbenbodenrand und Laufbuchse beziehungsweise Zylinderwand erfolgen kann.

Einem weiteren Gedanken der Erfindung gemäß wird vorgeschlagen, daß die jeweilige geneigt zur Kolbenachse verlaufende Verjüngung axial oberhalb der Nut in einem etwa
parallel zur Kolbenachse verlaufenden Bereich übergeht,
dessen Durchmesser geringer ist als der Restbereich des
Kolbens.

Die Erfindung ist in der Zeichnung dargestellt und wird
im folgenden näher beschrieben. Es zeigen:

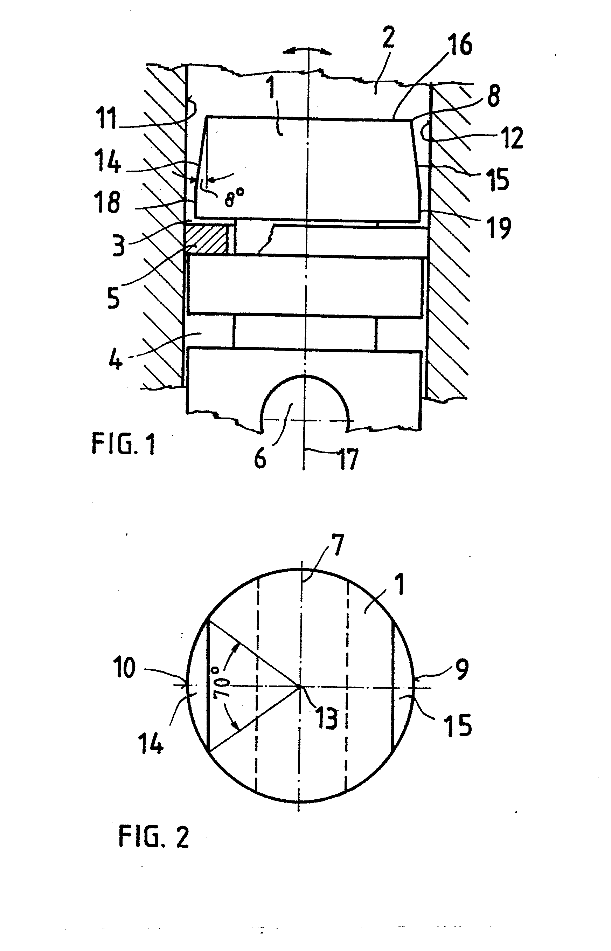

Figur 1,2   partieller "Cut-Back-Kolben" in verschiedenen Ansichten.

Die Figuren 1 und 2 zeigen den erfindungsgemäßen Kolben 1
in zwei Ansichten. Der Kolben 1, der im Einbauzustand
gezeichnet ist, ist innerhalb eines Zylinders 2 angeordnet und weist mehrere umlaufende Nuten 3,4 auf, die zur
Aufnahme von Kolbenringen 5 dienen. Der Kolben 1 ist mit
einem Bolzen 6 beweglich, d.h., um dessen Achse 7
schwenkbar verbunden. Durch den Anlagewechsel im Bereich
der beiden Totpunkte würde nun der Kolbenbodenrand 8 im
Bereich seiner beiden Arbeitsebenen 9,10 (die sich durch
die Schwenkung um die Achse 7 einstellen) kontinuierlich
mal an der einen, mal an der anderen Seite 11,12 des Zylinders 2 zur Anlage kommen und dort Polierstellen hervorrufen. Um dies zu vermeiden, ist der Kolben 1 im Bereich seiner Arbeitsebenen 9,10 verjüngt ausgebildet, wobei sich diese um 90° versetzt parallel zur Bolzenachse 7 verlaufend erstrecken. Ausgehend von der Mitte 13 der jeweiligen Arbeitsebene 9 oder 10 erstrecken sich die verjüngten Bereiche 14,15 rechts und links in beiden Richtungen, und zwar unter einem Winkel von jeweils 35°, wobei ein Gesamtwinkel von 70° gebildet wird. Ausgehend vom Kolbenboden 16 erstreckt sich die jeweilige Verjüngung 14,15 konisch ansteigend in Richtung auf die Nut 3, und zwar unter einem Winkel von 8°. Axial oberhalb der Nut 3 geht der konische Teil 14,15 in einen parallel zur Kolbenachse 17 verlaufenden Bereich 18,19 über, dessen Durchmesser geringer als der Außendurchmesser des Kolbens 1 ist.

0153594

- 1 -

Patentansprüche:

1. Kolben für Brennkraftmaschinen, der brennraumseitig mindestens eine umlaufende Nut zur Aufnahme mindestens eines Dichtelementes sowie einen, mit axialem Abstand zum Kolbenboden sich diametral erstreckenden und mit dem Kolben verbundenen Bolzen aufweist und der im Bereich des Feuersteges verjüngt ausgebildet ist, dadurch gekennzeichnet, daß die Verjüngung (14,15) sich jeweils im wesentlichen unter einem Winkel von 90° versetzt zur Bolzenachse (7) in den Arbeitsebenen (9,10) des Kolbens (1) erstreckt.

2. Kolben nach Anspruch 1, dadurch gekennzeichnet, daß der Feuersteg einen im wesentlichen ellipsenförmigen Querschnitt mit im Bereich der Arbeitsebenen (9,10) verjüngtem Durchmesser aufweist.

3. Kolben nach Anspruch 1, dadurch gekennzeichnet, daß der Feuersteg im Bereich der Arbeitsbenenen (9,10), vom Kolbenboden (16) ausgehend, mit einem in Richtung der Nut (3) verlaufenden Absatz ausgebildet ist.

4. Kolben nach den Ansprüchen 1 bis 3, dadurch gekennzeichnet, daß die Umfangslänge eines jeden verjüngten Bereiches (14,15) sich - ausgehend von der jeweiligen Arbeitsebene (9,10) - in beiden Umfangsrichtungen zwischen 10° und 45° Drehwinkel erstreckt.

5. Kolben nach den Ansprüchen 1 bis 4, dadurch gekennzeichnet, daß jeder verjüngte Bereich (14,15) sich - ausgehend von der jeweiligen Arbeitsbene (9,10) - in beiden Umfangsrichtungen zwischen 10° und 30° erstreckt.

6. Kolben nach den Ansprüchen 1 bis 5, dadurch gekennzeichnet, daß die Neigung des jeweiligen verjüngten Bereiches (14,15), ausgehend vom Kolbenboden (16), in Richtung der Nut (3) ansteigend unter einem Winkel von 2° bis 10° verläuft.

7. Kolben nach den Ansprüchen 1 bis 6, dadurch gekennzeichnet, daß die jeweilige Verjüngung (14,15) axial oberhalb der Nut (3) in einen etwa parallel zur Kolbenachse (17) verlaufenden Bereich (18,19) übergeht.

8. Kolben nach den Ansprüchen 1 bis 7, dadurch gekennzeichnet, daß der Durchmesser des parallel zur Kolbenachse (17) verlaufenden Bereiches (18,19) geringer ist als der Durchmesser des Kolbens (1).

0153594

FIG. 1

FIG. 2